# EUROPEAN PATENT APPLICATION

(11) **EP 2 993 865 A1**
(43) Date of publication of application: **09.03.2016**
(21) Application number: 13888495.2
(22) Date of filing: 26.06.2013
(51) Int. Cl.: H04L 29/08, H04W 88/16

(54) **METHOD, SYSTEM AND RELATED DEVICE FOR PROCESSING SERVICE**

(71) Applicant: Huawei Technologies Co., Ltd., Longgang District Shenzhen, Guangdong 518129 (CN)
(72) Inventor: GUO, Dong, Shenzhen Guangdong 518129 (CN); GUO, Jiancheng, Shenzhen Guangdong 518129 (CN)
(74) Representative: Pfenning, Meinig & Partner mbB
(86) International application number: PCT/CN2013/078020
(87) International publication number: WO 2014/205686

(57) **Abstract**

Embodiments of the present invention provide a service processing method, system and relevant device. The method includes: when a gateway device receives an activation request sent by a user equipment, allocating, by the gateway device, a user IP address to the user equipment; and sending, by the gateway device, user information and the user IP address of the user equipment to an SP server, so that the SP server saves a correspondence between the user IP address and the user information and performs service processing on a service packet according to the correspondence between the user IP address and the user information. By using the present invention, loss of system resources of a gateway device may be reduced.

## Description

### TECHNICAL FIELD

The present invention relates to the field of communications technologies, and in particular, to a service processing method, system, and relevant device.

### BACKGROUND

An SP (Service Provider, service provider) obtains location information (latitude and longitude and coordinate data) of a user equipment by using a mobile communication network and a positioning technology, and develops a series of new mobile data services of application services, and will become an inseparable part of our comfort life. With the evolution of network technologies, location service applications become more abundant, and more valuable multimedia applications are provided for users.

An operator usually has a cooperative relationship with the SP, and the operator may provide services such as a channel and navigation between the user equipment and the SP, and the SP may provide content services. If an SP server needs to perform operations such as content recommendation and accounting on a certain user equipment, the SP server needs to record user information corresponding to the user equipment. Because a service packet initiated by the user equipment includes only a dynamically allocated IP (Internet Protocol, Internet Protocol) address and does not include user information such as a mobile station identification number, the operator in the prior art needs to perform a header enhancement in a gateway device, that is, insert the user information in the service packet. For an HTTP (Hypertext transfer protocol, Hypertext Transfer Protocol)/WAP(Wireless Application Protocol, Wireless Application Protocol) service, after the user information is inserted into the service packet, an original TCP (Transmission Control Protocol, Transmission Control Protocol) Sequence (Sequence, sequence) of a service stream may be changed, and therefore the gateway device needs to dynamically maintain the Sequence of all TCP packets. The operation needs to be performed on every packet, which deteriorates device performance.

### SUMMARY

Embodiments of the present invention provide a service processing method, system and relevant device, which can reduce consumption of system resources of a gateway device.

According to a first aspect, the present invention provides a service processing method, which includes:
when a gateway device receives an activation request sent by a user equipment, allocating, by the gateway device, a user IP address to the user equipment; and
sending, by the gateway device, user information and the user IP address of the user equipment to an SP server, so that the SP server saves a correspondence between the user IP address and the user information and performs service processing on a service packet according to the correspondence between the user IP address and the user information.

In a first possible implementation manner, before the step of sending, by the gateway device, user information and the user IP address of the user equipment to an SP server, the method further includes:
determining, by the gateway device, whether the activation request is a request based on the user information; and
if it is determined that the activation request is a request based on the user information, performing, by the gateway device, the step of sending the user information and user IP address of the user equipment to the SP server.

With reference to the first aspect or the first possible implementation manner of the first aspect, in a second possible implementation manner, the sending, by the gateway device, user information and the user IP address of the user equipment to an SP server, so that the SP server saves a correspondence between the user IP address and the user information and performs service processing on a service packet according to the correspondence between the user IP address and the user information, includes:
encapsulating, by the gateway device, the user information and user IP address of the user equipment into a user information packet; and
sending, by the gateway device, the user information packet to the SP server, so that the SP server parses the user information packet and saves the correspondence between the user IP address and the user information included in the user information packet and performs service processing on the service packet according to the correspondence between the user IP address and the user information.

With reference to the second possible implementation manner of the first aspect, in a third possible implementation manner, the sending, by the gateway device, the user information packet to the SP server, includes:
establishing, by the gateway device, service interaction with the SP server in an IP-based network transmission mode; and
sending, by the gateway device, the user information packet to the SP server by using the service interaction.

According to a second aspect, the present invention provides a service processing method, which includes:
receiving, by an SP server, user information and a user IP address of a user equipment which are sent by a gateway device, and saving a correspondence between the user IP address and the user information; and
when the SP server receives a service packet of the user equipment forwarded by the gateway device, performing, by the SP server, service processing on the service packet according to the correspondence between the user IP address and the user information.

In a first possible implementation manner, the receiving, by an SP server, user information and a user IP address of a user equipment which are sent by a gateway device, and saving a correspondence between the user IP address and the user information, include:
receiving, by the SP server, a user information packet sent by the gateway device, where the user information packet includes the user information and user IP address of the user equipment, and the user information packet is generated when the gateway device receives an activation request sent by the user equipment; and
parsing, by the SP server, the user information packet, and saving the correspondence between the user IP address and the user information included in the user information packet.

With reference to the second aspect or the first possible implementation manner of the second aspect, in a second possible implementation manner, when the SP server receives a service packet of the user equipment forwarded by the gateway device, the performing, by the SP server, service processing on the service packet according to the correspondence between the user IP address and the user information, includes:
when the SP server receives the service packet of the user equipment forwarded by the gateway device, extracting, by the SP server, the user IP address from the received service packet;
obtaining, by the SP server according to the correspondence between the user IP address and the user information, the user information corresponding to the user IP address extracted from the service packet; and
performing, by the SP server, service processing on the service packet according to the obtained user information, where the service processing includes content recommendation service processing and accounting service processing.

According to a third aspect, the present invention provides a computer storage medium, where:
the computer storage medium may store a program, and when the program is executed, a part or all of the steps in the service processing method provided in the first aspect are included.

According to a fourth aspect, the present invention provides a computer storage medium, where:
the computer storage medium may store a program, and when the program is executed, a part or all of the steps in the service processing method provided in the second aspect are included.

According to a fifth aspect, the present invention provides a gateway device, which includes:
an allocating module, configured to: when an activation request sent by a user equipment is received, allocate a user IP address to the user equipment; and
a sending module, configured to send user information and the user IP address of the user equipment to an SP server, so that the SP server saves a correspondence between the user IP address and the user information and performs service processing on a service packet according to the correspondence between the user IP address and the user information.

In a first possible implementation manner, the gateway device further includes:
a determining module, configured to determine whether the activation request is a request based on the user information; where
the sending module is specifically configured to: if the determining module determines that the activation request is a request based on the user information, send the user information and user IP address of the user equipment to the SP server.

With reference to the fifth aspect or the first possible implementation manner of the fifth aspect, in a second possible implementation manner, the sending module includes:
an encapsulating unit, configured to encapsulate the user information and user IP address of the user equipment into a user information packet; and
a packet sending unit, configured to send the user information packet to the SP server, so that the SP server parses the user information packet and saves the correspondence between the user IP address and the user information included in the user information packet and performs service processing on the service packet according to the correspondence between the user IP address and the user information.

With reference to the second possible implementation manner of the fifth aspect, in a fourth possible implementation manner, the packet sending unit includes:
an establishing subunit, configured to establish service interaction with the SP server in an IP-based network transmission mode; where
the packet sending unit is specifically configured to send the user information packet to the SP server by using the service interaction.

According to a sixth aspect, the present invention provides an SP server, which includes:
a receiving module, configured to receive user information and a user IP address of a user equipment which are sent by a gateway device;
a saving module, configured to save a correspondence between the user IP address and the user information; and
a processing module, configured to: when a service packet of the user equipment forwarded by the gateway device is received, perform service processing on the service packet according to the correspondence between the user IP address and the user information in the saving module.

In a first possible implementation manner,
the receiving module is specifically configured to receive a user information packet sent by the gateway device, where the user information packet includes the user information and user IP address of the user equipment, and the user information packet is generated when the gateway device receives an activation request sent by the user equipment; and
the saving module is specifically configured to parse the user information packet and save the correspondence between the user IP address and the user information included in the user information packet.

With reference to the sixth aspect or the first possible implementation manner of the sixth aspect, in a second possible implementation manner, the processing module includes:
an extracting unit, configured to: when the service packet of the user equipment forwarded by the gateway device is received, extract the user IP address from the received service packet;
an obtaining unit, configured to obtain, according to the correspondence between the user IP address and the user information in the saving module, the user information corresponding to the user IP address extracted from the service packet; and
a service processing unit, configured perform service processing on the service packet according to the obtained user information, where the service processing includes content recommendation service processing and accounting service processing.

According to a seventh aspect, the present invention provides a service processing system, which includes: the foregoing gateway device and the foregoing SP server.

According to an eighth aspect, the present invention provides a gateway device, which includes a processor, a communication interface, and a memory, where:
the communication interface is configured to perform communication with a user equipment and an SP server;
the memory is configured to store a program; and
the processor is configured to execute the program to implement
when an activation request sent by the user equipment is received, allocating a user IP address to the user equipment; and
sending user information and the user IP address of the user equipment to the SP server, so that the SP server saves a correspondence between the user IP address and the user information and performs service processing on a service packet according to the correspondence between the user IP address and the user information.

In a first possible implementation manner, the processor is further configured to:
determine whether the activation request is a request based on the user information; and
if it is determined that the activation request is a request based on the user information, perform the step of sending the user information and user IP address of the user equipment to the SP server.

With reference to the eighth aspect or the first possible implementation manner of the eighth aspect, in a second possible implementation manner, the processor is specifically configured to:
encapsulate the user information and user IP address of the user equipment into a user information packet; and
send the user information packet to the SP server, so that the SP server parses the user information packet and saves the correspondence between the user IP address and the user information included in the user information packet and performs service processing on the service packet according to the correspondence between the user IP address and the user information.

With reference to the second possible implementation manner of the eighth aspect, in a third possible implementation manner, the processor is specifically configured to:
establish service interaction with the SP server in an IP-based network transmission mode; and
send the user information packet to the SP server by using the service interaction.

According to a ninth aspect, the present invention provides an SP server, which includes a processor, a communication interface, and a memory, where:
the communication interface is configured to perform communication with a gateway device;
the memory is configured to store a program; and
the processor is configured to execute the program to implement
receiving user information and a user IP address of a user equipment which are sent by the gateway device, and saving a correspondence between the user IP address and the user information; and
when a service packet of the user equipment forwarded by the gateway device is received, performing service processing on the service packet according to the correspondence between the user IP address and the user information.

In a first possible implementation manner, the processor is specifically configured to:
receive a user information packet sent by the gateway device, where the user information packet includes the user information and user IP address of the user equipment, and the user information packet is generated when the gateway device receives an activation request sent by the user equipment; and
parse the user information packet and save the correspondence between the user IP address and the user information included in the user information packet.

With reference to the ninth aspect or the first possible implementation manner of the ninth aspect, in a second possible implementation manner, the processor is specifically configured to:
when the service packet of the user equipment forwarded by the gateway device is received, extract the user IP address from the received service packet;
obtain, according to the correspondence between the user IP address and the user information, the user information corresponding to the user IP address extracted from the service packet; and
perform service processing on the service packet according to the obtained user information, where the service processing includes content recommendation service processing and accounting service processing.

As may be seen above, in some feasible implementation manners of the present invention, a gateway device may send user information and a user IP address of a user equipment to an SP server, so that the SP server may save a correspondence between the user IP address and the user information; then in subsequent service access, the SP server may find the corresponding user information according to the correspondence between the user IP address and the user information. Therefore, the gateway device does not need to provide the user information for the SP server again, and the gateway device does not need to maintain the service packet, so that loss of system resources of the gateway device is reduced.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a service processing method according to an embodiment of the present invention;
FIG. 2 is a schematic flowchart of one of methods for determining an activation request according to an embodiment of the present invention;
FIG. 3 is a schematic flowchart of one of methods for encapsulating a user information packet according to an embodiment of the present invention;
FIG. 4 is a schematic flowchart of one of methods for sending a user information packet according to an embodiment of the present invention;
FIG. 5 is a schematic flowchart of another service processing method according to an embodiment of the present invention;
FIG. 6 is a schematic flowchart of one of methods for receiving a user information packet according to an embodiment of the present invention;
FIG. 7 is a schematic flowchart of one of methods for processing a service packet according to an embodiment of the present invention;
FIG. 8 is a schematic structural diagram of a service processing system according to an embodiment of the present invention;
FIG. 9 is a schematic structural diagram of a gateway device according to an embodiment of the present invention;
FIG. 10 is a schematic structural diagram of another gateway device according to an embodiment of the present invention;
FIG. 11 is a schematic structural diagram of a sending module according to an embodiment of the present invention;
FIG. 12 is a schematic structural diagram of an SP server according to an embodiment of the present invention;
FIG. 13 is a schematic structural diagram of a processing module according to an embodiment of the present invention;
FIG. 14 is a schematic structural diagram of another gateway device according to an embodiment of the present invention; and
FIG. 15 is a schematic structural diagram of another SP server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

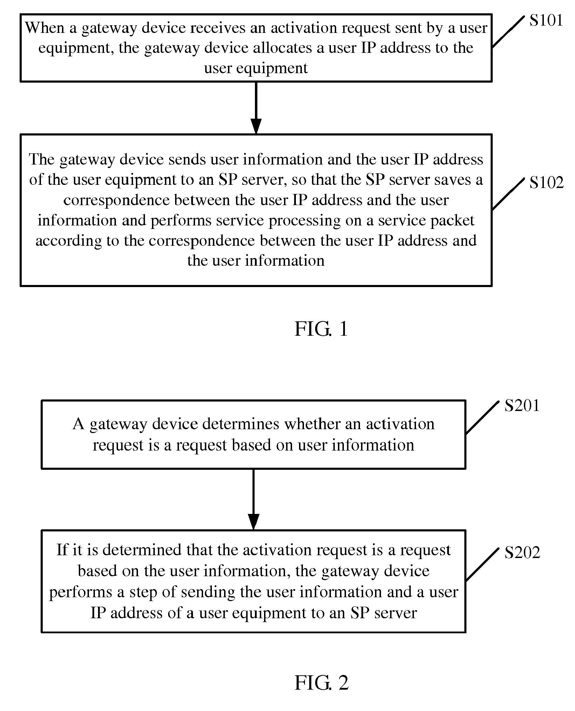

Reference is made to FIG. 1, which is a schematic flowchart of a service processing method according to an embodiment of the present invention. The method includes the following:
S101. When a gateway device receives an activation request sent by a user equipment, the gateway device allocates a user IP address to the user equipment.

Specifically, when the gateway device receives the activation request sent by the user equipment, the gateway device allocates the user IP address to the user equipment, so that the user equipment may carry the user IP address in a service packet subsequently sent. The gateway device may determine, according to the activation request, whether it is necessary to provide the user information for an SP server. If the gateway device needs to provide the user information for the SP server, step S 102 is performed.

S102. The gateway device sends user information and the user IP address of the user equipment to the SP server, so that the SP server saves a correspondence between the user IP address and the user information and performs service processing on a service packet according to the correspondence between the user IP address and the user information.

Specifically, the gateway device sends the user information and user IP address of the user equipment to the SP server, so that the SP server saves the correspondence between the user IP address and the user information, so that the SP server may perform service processing on the service packet according to the correspondence between the user IP address and the user information. That is, in subsequent service access by a user, the gateway device may not provide user information of the user for the SP server again, and the gateway device does not need to maintain the service packet; instead, the SP server may obtain, according to the saved correspondence between the user IP address and the user information, the user information corresponding to the user IP address in a subsequently received service packet, and perform relevant service processing according to the user information, such as content recommendation service processing and accounting service processing.

As may be seen above, in some feasible implementation manners of the present invention, the gateway device may send the user information and user IP address of the user equipment to the SP server, so that the SP server may save the correspondence between the user IP address and the user information; then in subsequent service access, the SP server may find the corresponding user information according to the correspondence between the user IP address and the user information. Therefore, the gateway device does not need to provide the user information for the SP server again, and the gateway device does not need to maintain the service packet, so that loss of system resources of the gateway device is reduced.

Further, reference is made to FIG. 2, which is a schematic flowchart of a method for determining an activation request according to an embodiment of the present invention. The method in the embodiment of the present invention may be performed before step S102 in the embodiment corresponding to FIG. 1. In the embodiment of the present invention, the determination of an activation request is used for description. The method in the embodiment of the present invention specifically includes the following:
S201. The gateway device determines whether the activation request is a request based on the user information.

Specifically, the gateway device determines whether the activation request is a request based on the user information, that is, the gateway device determines whether it is necessary to provide the user information of the user equipment for the SP server after the user equipment is activated.

S202. If it is determined that the activation request is a request based on the user information, the gateway device performs the step of sending the user information and user IP address of the user equipment to the SP server.

When it is determined that the activation request is a request based on the user information in S201, it is determined that the gateway device needs to provide the user information for the SP server, so that the gateway device performs step S102. That is, the gateway device performs the step of sending the user information and user IP address of the user equipment to the SP server. When it is determined that the activation request is not a request based on the user information in S201, the gateway device does not need to send the user information and user IP address of the user equipment to the SP server.

As may be seen above, in some feasible implementation manners of the present invention, the gateway device determines whether the activation request is a request based on the user information, so as to determine whether to provide the user information for the SP server, so that the gateway device may satisfy a requirement of the SP server for the user information rapidly and effectively.

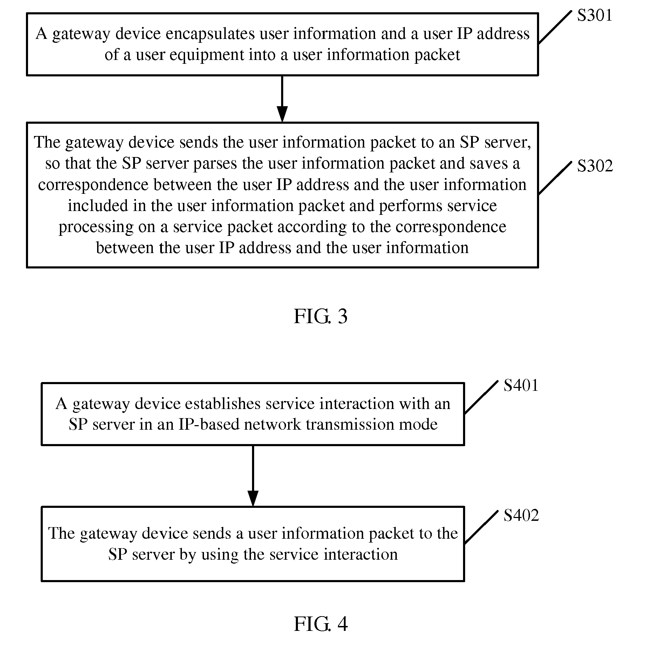

Further, reference is made to FIG. 3, which is a schematic flowchart of one of methods for encapsulating a user information packet according to an embodiment of the present invention. The method in the embodiment of the present invention may correspond to S102 in the embodiment corresponding to FIG. 1. In the embodiment of the present invention, the encapsulation of a user information packet is used for description, and the method in the embodiment of the present invention specifically includes the following:
S301. The gateway device encapsulates the user information and user IP address of the user equipment into a user information packet.

Specifically, when the gateway device allocates the user IP address to the user equipment, and determines that the activation request is a request based on the user information, the gateway device encapsulates the user information and user IP address of the user equipment into a user information packet. The user information packet may further include the correspondence between the user information and the user IP address.

S302. The gateway device sends the user information packet to the SP server, so that the SP server parses the user information packet and saves the correspondence between the user IP address and the user information included in the user information packet and performs service processing on the service packet according to the correspondence between the user IP address and the user information.

When the gateway device obtains the user information packet by using encapsulation, the gateway device may send the user information packet to the SP server, so that the SP server parses the user information packet and saves the correspondence between the user IP address and the user information included in the user information packet and performs service processing on the service packet according to the correspondence between the user IP address and the user information. That is, in subsequent service access by the user, the gateway device may not provide the user information of the user for the SP server again, and the gateway device does not need to maintain the service packet; instead, the SP server may obtain, according to the saved correspondence between the user IP address and the user information, the user information corresponding to the user IP address in a subsequently received service packet, and perform relevant service processing according to the user information, such as content recommendation service processing and accounting service processing.

As may be seen above, in some feasible implementation manners of the present invention, the gateway device may encapsulate the user information and user IP address of the user equipment into a user information packet, and send the user information packet to the SP server, so that the SP server may save the correspondence between the user IP address and the user information; then in subsequent service access, the SP server may find the corresponding user information according to the correspondence between the user IP address and the user information. Therefore, the gateway device does not need to provide the user information for the SP server again, and the gateway device does not need to maintain the service packet, so that loss of system resources of the gateway device is reduced.

Reference is made to FIG. 4, which is a schematic flowchart of a method for sending a user information packet according to an embodiment of the present invention. The method in the embodiment of the present invention may correspond to S302 in the embodiment corresponding to FIG. 3. In the embodiment of the present invention, the sending of a user information packet is used for description, and the method in the embodiment of the present invention specifically includes the following:
S401. The gateway device establishes service interaction with the SP server in an IP-based network transmission mode.
S402. The gateway device sends the user information packet to the SP server by using the service interaction.

Specifically, when the gateway device encapsulates the user information and user IP address into the user information packet, the gateway device may establish service interaction with the SP server in the IP-based network transmission mode, and send the user information packet to the SP server by using the service interaction, so that the SP server may record the user information and user IP address carried in the user information packet. The gateway device may establish the service interaction with the SP server in any mode to send the user information packet obtained by using encapsulation to the SP server. That is, the mode in which the gateway sends the user information packet to the SP server is not limited to the IP-based network transmission mode. The gateway device may send the user information packet to the SP server in any mode, which is not further described herein.

As may be seen above, in some feasible implementation manners of the present invention, the gateway device sends the user information packet to the SP server in the IP-based network transmission mode, so that the gateway device may provide the required user information for the SP server rapidly.

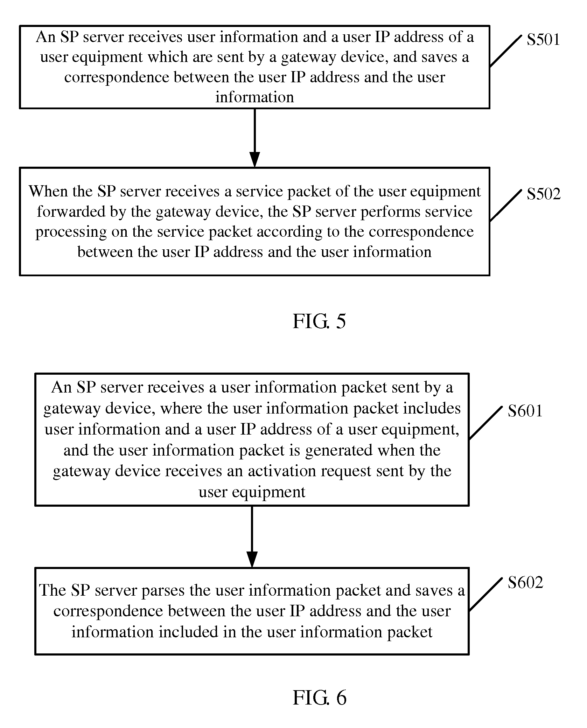

Reference is made to FIG. 5, which is a schematic flowchart of another service processing method according to an embodiment of the present invention. The method includes the following:
S501. An SP server receives user information and a user IP address of a user equipment which are sent by a gateway device, and saves a correspondence between the user IP address and the user information.

Specifically, when the gateway device receives an activation request sent by the user equipment, and the activation request is a request based on the user information, the SP server may receive the user information and user IP address of the user equipment which are sent by the gateway device, and save the correspondence between the user IP address and the user information.

S502. When the SP server receives a service packet of the user equipment forwarded by the gateway device, the SP server performs service processing on the service packet according to the correspondence between the user IP address and the user information.

Specifically, when the SP server receives the service packet of the user equipment forwarded by the gateway device, the SP server performs service processing, such as content recommendation service processing and accounting service processing, on the service packet according to the correspondence between the user IP address and the user information. The SP server may obtain, according to the saved correspondence between the user IP address and the user information, the user information corresponding to the user IP address in a subsequently received service packet. Therefore, in a subsequent service request, the gateway device may not need to provide the user information for the SP server again, and the gateway device may not need to maintain the service packet.

As may be seen above, in some feasible implementation manners of the present invention, the gateway device sends the user information and user IP address of the user equipment to the SP server in advance, so that the SP server may find the relevant user information according to the correspondence between the user IP address and the user information. Therefore, in subsequent service access, the gateway device does not need to provide the user information for the SP server again, and the gateway device does not need to maintain the service packet, so that loss of system resources of the gateway device is reduced.

Further, reference is made to FIG. 6, which is a schematic flowchart of a method for receiving a user information packet according to an embodiment of the present invention. The method in the embodiment of the present invention may correspond to S501 in the embodiment corresponding to FIG. 5. In the embodiment of the present invention, the reception of a user information packet is used for description, and the method in the embodiment of the present invention specifically includes the following:

S601. The SP server receives a user information packet sent by the gateway device, where the user information packet includes the user information and user IP address of the user equipment, and the user information packet is generated when the gateway device receives an activation request sent by the user equipment.

The specific process in which the SP server receives the user information and user IP address of the user equipment may be: receiving a user information packet sent by the gateway device, where the user information packet is obtained by encapsulating the user information and user IP address of the user equipment. The user information packet is generated when the gateway device receives the activation request sent by the user equipment and the activation request is a request based on the user information.

S602. The SP server parses the user information packet and saves the correspondence between the user IP address and the user information included in the user information packet.

As may be seen above, in some feasible implementation manners of the present invention, the SP server receives the user information packet sent by the gateway device, and may save the correspondence between the user IP address and the user information included in the user information packet, so that the SP server may find the relevant user information according to the correspondence between the user IP address and the user information. Therefore, in subsequent service access, the gateway device does not need to provide the user information for the SP server again, and the gateway device does not need to maintain the service packet, so that loss of system resources of the gateway device is reduced.

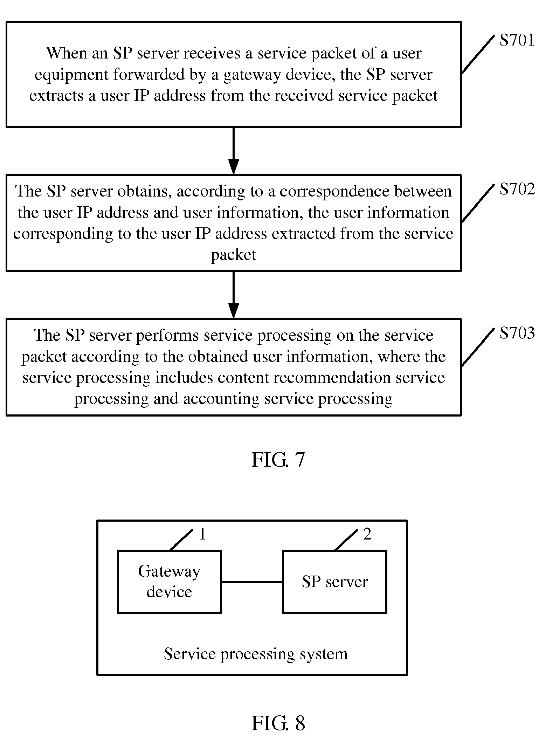

Reference is made to FIG. 7, which is a schematic flowchart of a method for processing a service packet according to an embodiment of the present invention. The method in the embodiment of the present invention may correspond to S502 in the embodiment corresponding to FIG. 5. In the embodiment of the present invention, the processing of a service packet is used for description, and the method in the embodiment of the present invention specifically includes the following:
S701. When the SP server receives the service packet of the user equipment forwarded by the gateway device, the SP server extracts the user IP address from the received service packet.
S702. The SP server obtains, according to the correspondence between the user IP address and the user information, the user information corresponding to the user IP address extracted from the service packet.

Specifically, after the SP server extracts the user IP address from the service packet, the SP server may obtain, according to the saved correspondence between the user IP address and the user information, the user information corresponding to the user IP address from the service packet.

S703. The SP server performs service processing on the service packet according to the obtained user information, where the service processing includes content recommendation service processing and accounting service processing.

In subsequent service access, the SP server may obtain, according to the correspondence between the user IP address and the user information, the user information corresponding to the user IP address in a subsequently received service packet, and perform relevant service processing according to the obtained user information. During that period, the gateway device does not need to provide the user information for the SP server again, and does not need to maintain the service packet.

As may be seen above, in some feasible implementation manners of the present invention, the gateway device sends the user information and user IP address of the user equipment to the SP server in advance, so that the SP server may find the relevant user information according to the correspondence between the user IP address and the user information. Therefore, in a subsequent service request, the gateway device does not need to provide the user information for the SP server again, and does not need to maintain the service packet, so that loss of system resources of the gateway device is reduced.

An embodiment of the present invention further provides a computer storage medium, where the computer storage medium may store a program, and when the program is executed, a part or all of the steps in the service processing method described in the method embodiment of FIG. 1 to FIG. 4 are included.

An embodiment of the present invention further provides another computer storage medium, where the computer storage medium may store a program, and when the program is executed, a part or all of the steps in the service processing method described in the method embodiment of FIG. 5 to FIG. 7 are included.

Reference is made to FIG. 8, which is a schematic structural diagram of a service processing system according to an embodiment of the present invention, where the system includes a gateway device 1 and an SP server 2.

The gateway device 1 is configured to: when an activation request sent by a user equipment is received, allocate a user IP address to the user equipment; and send user information and the user IP address of the user equipment to the SP server 2, so that the SP server 2 saves a correspondence between the user IP address and the user information and performs service processing on a service packet according to the correspondence between the user IP address and the user information.

The gateway device 1 is further configured to determine whether the activation request is a request based on the user information; and if it is determined that the activation request is a request based on the user information, perform the step of sending the user information and user IP address of the user equipment to the SP server 2.

The gateway device 1 is specifically configured to encapsulate the user information and user IP address of the user equipment into a user information packet; and send the user information packet to the SP server 2, so that the SP server 2 parses the user information packet and saves the correspondence between the user IP address and the user information included in the user information packet and performs service processing on the service packet according to the correspondence between the user IP address and the user information.

The gateway device 1 is specifically configured to establish service interaction with the SP server 2 in an IP-based network transmission mode; and send the user information packet to the SP server 2 by using the service interaction.

The SP server 2 is configured to receive the user information and user IP address of the user equipment which are sent by the gateway device 1, and save the correspondence between the user IP address and the user information; and when the service packet of the user equipment forwarded by the gateway device 1 is received, perform service processing on the service packet according to the correspondence between the user IP address and the user information.

The SP server 2 is specifically configured to receive the user information packet sent by the gateway device 1, where the user information packet includes the user information and user IP address of the user equipment, and the user information packet is generated when the gateway device 1 receives the activation request sent by the user equipment; parse the user information packet and save the correspondence between the user IP address and the user information included in the user information packet.

The SP server 2 is specifically configured to: when the service packet of the user equipment forwarded by the gateway device 1 is received, extract the user IP address from the received service packet; obtain, according to the correspondence between the user IP address and the user information, the user information corresponding to the user IP address extracted from the service packet; and perform service processing on the service packet according to the obtained user information, where the service processing includes content recommendation service processing and accounting service processing.

As may be seen above, in some feasible implementation manners of the present invention, the gateway device 1 sends the user information and user IP address of the user equipment to the SP server 2 in advance, so that the SP server 2 may find the relevant user information according to the correspondence between the user IP address and the user information. Therefore, in a subsequent service request, the gateway device 1 does not need to provide the user information for the SP server 2 again, and does not need to maintain the service packet, so that loss of system resources of the gateway device 1 is reduced.

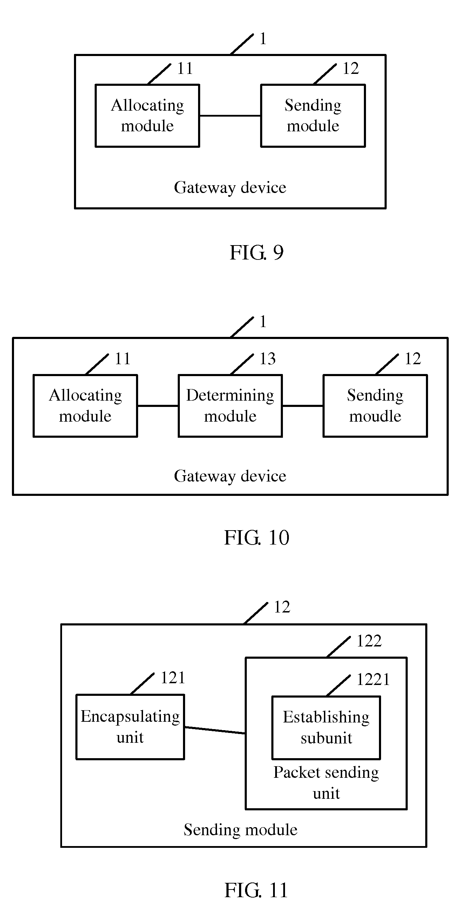

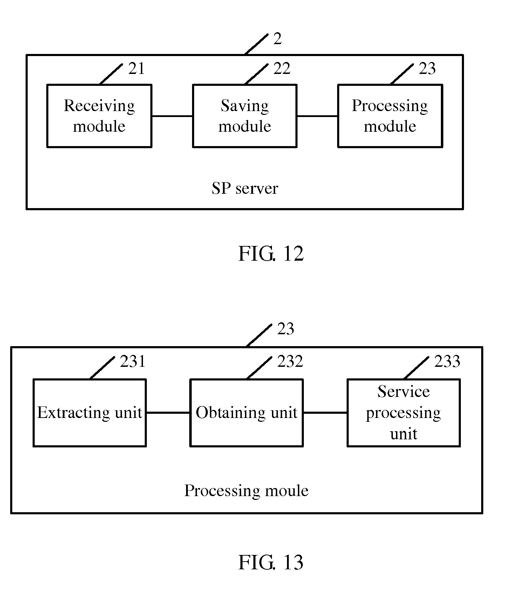

Hereinafter, the gateway device 1 in FIG. 8 is described in detail with reference to FIG. 9 to FIG. 11, and the SP server 2 in FIG. 8 is described in detail with reference to FIG. 12 and FIG. 13.

Specifically, reference is made to FIG. 9, which is a schematic structural diagram of a gateway device 1 according to an embodiment of the present invention, where the gateway device 1 may include: an allocating module 11 and a sending module 12.

The allocating module 11 is configured to: when an activation request sent by a user equipment is received, allocate a user IP address to the user equipment.

Specifically, when the gateway device 1 receives the activation request sent by the user equipment, the allocating module 11 allocates the user IP address to the user equipment, so that the user equipment may carry the user IP address in a service packet subsequently sent.

The sending module 12 is configured to send user information and the user IP address of the user equipment to an SP server 2, so that the SP server 2 saves a correspondence between the user IP address and the user information and performs service processing on a service packet according to the correspondence between the user IP address and the user information.

Specifically, the sending module 12 sends the user information and user IP address of the user equipment to the SP server 2, so that the SP server 2 saves the correspondence between the user IP address and the user information. Therefore, in subsequent service access by a user, the gateway device 1 may not provide user information of the user for the SP server 2 again, and the gateway device 1 does not need to maintain the service packet; instead, the SP server 2 may obtain, according to the saved correspondence between the user IP address and the user information, the user information corresponding to the user IP address in a subsequently received service packet, and perform relevant service processing according to the user information, such as content recommendation service processing and accounting service processing.

As may be seen above, in some feasible implementation manners of the present invention, the gateway device 1 sends the user information and user IP address of the user equipment to the SP server 2 in advance, so that the SP server 2 may find the relevant user information according to the correspondence between the user IP address and the user information. Therefore, in a subsequent service request, the gateway device 1 does not need to provide the user information for the SP server 2 again, and does not need to maintain the service packet, so that loss of system resources of the gateway device 1 is reduced.

Further, reference is made to FIG. 10, which is a schematic structural diagram of another gateway device 1 according to an embodiment of the present invention, where the gateway device 1 may include: the allocating module 11 and sending module 12 in the embodiment corresponding to FIG. 9. Further, the gateway device 1 in the embodiment of the present invention may further include: a determining module 13.

The determining module 13 is configured to determine whether the activation request is a request based on the user information.

Specifically, the determining module 13 determines whether the activation request is a request based on the user information, that is, the determining module 13 determines whether it is necessary to provide the user information of the user equipment for the SP server 2 after the user equipment is activated.

The sending module 12 is specifically configured to: if the determining module 13 determines that the activation request is a request based on the user information, send the user information and user IP address of the user equipment to the SP server 2.

As may be seen above, in some feasible implementation manners of the present invention, the gateway device 1 determines whether the activation request is a request based on the user information, so as to determine whether to provide the user information for the SP server 2, so that the gateway device 1 may satisfy a requirement of the SP server 2 for the user information rapidly and effectively.

Further, reference is made to FIG. 11, which is a schematic structural diagram of a sending module 12 according to an embodiment of the present invention, where the sending module 12 may include: an encapsulating unit 121 and a packet sending unit 122.

The encapsulating unit 121 is configured to encapsulate the user information and user IP address of the user equipment into a user information packet.

Specifically, when the allocating module 11 allocates the user IP address to the user equipment, and the determining module 13 determines that the activation request is a request based on the user information, the encapsulating unit 121 encapsulates the user information and user IP address of the user equipment into a user information packet. The user information packet may further include the correspondence between the user information and the user IP address.

The packet sending unit 122 is configured to send the user information packet to the SP server 2, so that the SP server 2 parses the user information packet and saves the correspondence between the user IP address and the user information included in the user information packet and performs service processing on the service packet according to the correspondence between the user IP address and the user information.

The packet sending unit 122 includes an establishing subunit 1221.

The establishing subunit 1221 is configured to establish service interaction with the SP server 2 in an IP-based network transmission mode.

The packet sending unit 122 is specifically configured to send the user information packet to the SP server 2 by using the service interaction.

Specifically, when the encapsulating unit 121 encapsulates the user information and user IP address into the user information packet, the establishing subunit 1221 may establish the service interaction with the SP server 2 in the IP-based network transmission mode, and the packet sending unit 122 sends the user information packet to the SP server 2 by using the service interaction, so that the SP server 2 may record the user information and user IP address carried in the user information packet. The establishing subunit 1221 may establish the service interaction with the SP server 2 in any mode. That is, the mode in which the packet sending unit 122 sends the user information packet to the SP server 2 is not limited to the IP-based network transmission mode. The packet sending unit 122 may send the user information packet to the SP server 2 in any mode, which is not further described herein.

As may be seen above, in some feasible implementation manners of the present invention, the gateway device 1 sends the user information packet to the SP server 2 in the IP-based network transmission mode, so that the gateway device 1 may provide the required user information for the SP server 2 rapidly.

Reference is made to FIG. 12, which is a schematic structural diagram of an SP server 2 according to an embodiment of the present invention, where the SP server 2 may include: a receiving module 21, a saving module 22, and a processing module 23.

The receiving module 21 is configured to receive user information and a user IP address of a user equipment which are sent by a gateway device 1.

Specifically, when the SP server 2 needs to perform a relevant service on a service packet by using the user information, the receiving module 21 may receive the user information and user IP address of the user equipment which are sent by the gateway device 1.

The saving module 22 is configured to save a correspondence between the user IP address and the user information.

The processing module 23 is configured to: when a service packet of the user equipment forwarded by the gateway device is received, perform service processing on the service packet according to the correspondence between the user IP address and the user information in the saving module 22.

Specifically, when the service packet of the user equipment forwarded by the gateway device 1 is received, the processing module 23 performs service processing, such as content recommendation service processing and accounting service processing, on the service packet according to the correspondence between the user IP address and the user information in the saving module 22. The processing module 23 may obtain, according to the saved correspondence between the user IP address and the user information, the user information corresponding to the user IP address in a subsequently received service packet. Therefore, in a subsequent service request, the gateway device 1 may not need to provide the user information for the SP server 2 again, and the gateway device 1 may not need to maintain the service packet.

The receiving module 21 is specifically configured to receive a user information packet sent by the gateway device 1, where the user information packet includes the user information and user IP address of the user equipment, and the user information packet is generated when the gateway device 1 receives an activation request sent by the user equipment.

The saving module 22 is specifically configured to parse the user information packet and save the correspondence between the user IP address and the user information included in the user information packet.

As may be seen above, in some feasible implementation manners of the present invention, the gateway device 1 sends the user information and user IP address of the user equipment to the SP server 2 in advance, so that the SP server 2 may find the relevant user information according to the correspondence between the user IP address and the user information. Therefore, in a subsequent service request, the gateway device 1 does not need to provide the user information for the SP server 2 again, and does not need to maintain the service packet, so that loss of system resources of the gateway device 1 is reduced.

Further, reference is made to FIG. 13, which is a schematic structural diagram of a processing module 23 according to an embodiment of the present invention, where the processing module 23 may include: an extracting unit 231, an obtaining unit 232, and a service processing unit 233.

The extracting unit 231 is configured to: when the service packet of the user equipment forwarded by the gateway device 1 is received, extract the user IP address from the received service packet.

Specifically, the extracting unit 231 extracts the user IP address from the received service packet when the service packet of the user equipment forwarded by the gateway device 1 is received.

The obtaining unit 232 is configured to obtain, according to the correspondence between the user IP address and the user information in the saving module 22, the user information corresponding to the user IP address extracted from the service packet.

Specifically, after the extracting unit 231 extracts the user IP address from the service packet, the obtaining unit 232 may obtain, according to the saved correspondence between the user IP address and the user information, the user information corresponding to the user IP address extracted from the service packet.

The service processing unit 233 is configured perform service processing on the service packet according to the obtained user information, where the service processing includes content recommendation service processing and accounting service processing.

As may be seen above, in some feasible implementation manners of the present invention, the gateway device 1 sends the user information and user IP address of the user equipment to the SP server 2 in advance, so that the SP server 2 may find the relevant user information according to the correspondence between the user IP address and the user information. Therefore, in a subsequent service request, the gateway device 1 does not need to provide the user information for the SP server 2 again, and does not need to maintain the service packet, so that loss of system resources of the gateway device 1 is reduced.

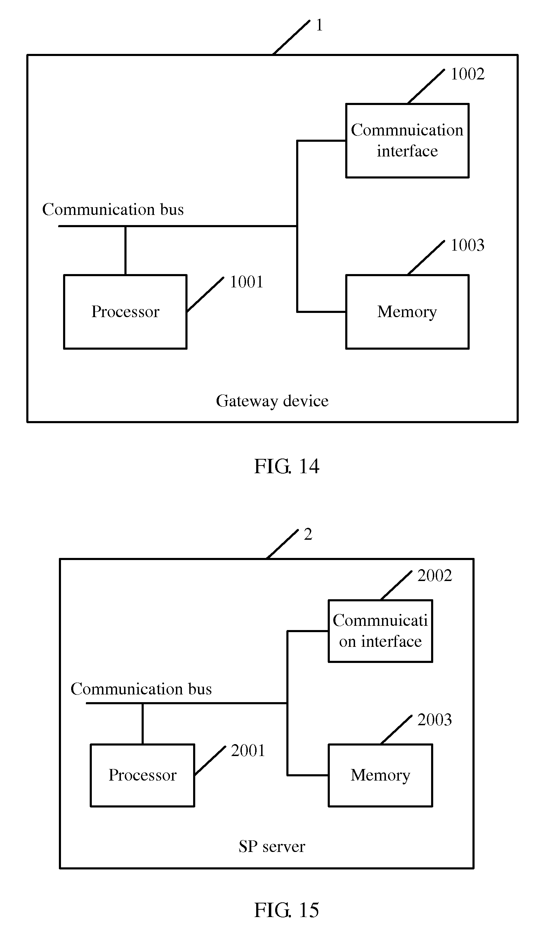

Reference is made to FIG. 14, which is a schematic structural diagram of another gateway device 1 according to an embodiment of the present invention, where the gateway device 1 may include a processor 1001, a communication interface 1002, and a memory 1003 (the number of processors 1001 in the gateway device 1be one or more, and one processor 1001 is used as an example in FIG. 14). In some embodiments of the present invention, the processor 1001, the communication interface 1002, and the memory 1003 may be connected by using a communication bus or another manner, where a communication bus connection is used as an example in FIG. 14.

The communication interface 1002 is configured to communicate with a user equipment and an SP server 2.

The memory 1003 is configured to store a program.

The processor 1001 is configured to execute the program to implement
when an activation request sent by the user equipment is received, allocating a user IP address to the user equipment; and
sending user information and the user IP address of the user equipment to the SP server 2, so that the SP server 2 saves a correspondence between the user IP address and the user information and performs service processing on a service packet according to the correspondence between the user IP address and the user information.

The processor 1001 is further configured to:
determine whether the activation request is a request based on the user information; and
if it is determined that the activation request is a request based on the user information, perform the step of sending the user information and user IP address of the user equipment to the SP server 2.

The processor 1001 is specifically configured to:
encapsulate the user information and user IP address of the user equipment into a user information packet; and
send the user information packet to the SP server 2, so that the SP server 2 parses the user information packet and saves the correspondence between the user IP address and the user information included in the user information packet and performs service processing on the service packet according to the correspondence between the user IP address and the user information.

The processor 1001 is specifically configured to:
establish service interaction with the SP server 2 in an IP-based network transmission mode; and
send the user information packet to the SP server 2 by using the service interaction.

As may be seen above, in some feasible implementation manners of the present invention, the gateway device 1 sends the user information and user IP address of the user equipment to the SP server 2 in advance, so that the SP server 2 may find the relevant user information according to the correspondence between the user IP address and the user information. Therefore, in a subsequent service request, the gateway device 1 does not need to provide the user information for the SP server 2 again, and does not need to maintain the service packet, so that loss of system resources of the gateway device 1 is reduced.

Reference is made to FIG. 15, which is a schematic structural diagram of another SP server 2 according to an embodiment of the present invention, where the SP server 2 may include a processor 2001, a communication interface 2002, and a memory 2003 (the number of processors 2001 may be one or more, and one processor 2001 is used as an example in FIG. 15). In some embodiments of the present invention, the processor 2001, the communication interface 2002, and the memory 2003 may be connected by using a communication bus or another manner, where a communication bus connection is used as an example in FIG. 15.

The communication interface 2002 is configured to communicate with a gateway device 1.

The memory 2003 is configured to store a program.

The processor 2001 is configured to execute the program to implement
receiving user information and a user IP address of a user equipment which are sent by the gateway device 1, and saving a correspondence between the user IP address and the user information; and
when a service packet of the user equipment forwarded by the gateway device 1 is received, performing service processing on the service packet according to the correspondence between the user IP address and the user information.

The processor 2001 is specifically configured to:
receive a user information packet sent by the gateway device 1, where the user information packet includes the user information and user IP address of the user equipment, and the user information packet is generated when the gateway device 1 receives an activation request sent by the user equipment; and
parse the user information packet and save the correspondence between the user IP address and the user information included in the user information packet.

The processor 2001 is specifically configured to:
when the service packet of the user equipment forwarded by the gateway device 1 is received, extract the user IP address from the received service packet;
obtain, according to the correspondence between the user IP address and the user information, the user information corresponding to the user IP address extracted from the service packet; and
perform service processing on the service packet according to the obtained user information, where the service processing includes content recommendation service processing and accounting service processing.

As may be seen above, in some feasible implementation manners of the present invention, the gateway device 1 sends the user information and user IP address of the user equipment to the SP server 2 in advance, so that the SP server 2 may find the relevant user information according to the correspondence between the user IP address and the user information. Therefore, in a subsequent service request, the gateway device 1 does not need to provide the user information for the SP server 2 again, and does not need to maintain the service packet, so that loss of system resources of the gateway device 1 is reduced.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

The foregoing disclosed descriptions are merely exemplary embodiments of the present invention. However, the protection scope of the present invention is not limited thereto. Therefore, equivalent variations made according to the claims of the present invention shall fall within the protection scope of the present invention.

## Claims

1. A service processing method, comprising:
when a gateway device receives an activation request sent by a user equipment, allocating, by the gateway device, a user IP address to the user equipment; and
sending, by the gateway device, user information and the user IP address of the user equipment to an SP server, so that the SP server saves a correspondence between the user IP address and the user information and performs service processing on a service packet according to the correspondence between the user IP address and the user information.

2. The method according to claim 1, wherein, before the step of sending, by the gateway device, user information and the user IP address of the user equipment to an SP server, the method further comprises:
determining, by the gateway device, whether the activation request is a request based on the user information; and
if it is determined that the activation request is a request based on the user information, performing, by the gateway device, the step of sending the user information and user IP address of the user equipment to the SP server.

3. The method according to claim 1 or 2, wherein, the sending, by the gateway device, user information and the user IP address of the user equipment to an SP server, so that the SP server saves a correspondence between the user IP address and the user information and performs service processing on a service packet according to the correspondence between the user IP address and the user information, comprises:
encapsulating, by the gateway device, the user information and user IP address of the user equipment into a user information packet; and
sending, by the gateway device, the user information packet to the SP server, so that the SP server parses the user information packet and saves the correspondence between the user IP address and the user information comprised in the user information packet and performs service processing on the service packet according to the correspondence between the user IP address and the user information.

4. The method according to claim 3, wherein, the sending, by the gateway device, the user information packet to the SP server, comprises:
establishing, by the gateway device, service interaction with the SP server in an IP-based network transmission mode; and
sending, by the gateway device, the user information packet to the SP server by using the service interaction.

5. A service processing method, comprising:
receiving, by an SP server, user information and a user IP address of a user equipment which are sent by a gateway device, and saving a correspondence between the user IP address and the user information; and
when the SP server receives a service packet of the user equipment forwarded by the gateway device, performing, by the SP server, service processing on the service packet according to the correspondence between the user IP address and the user information.

6. The method according to claim 5, wherein, the receiving, by an SP server, user information and a user IP address of a user equipment which are sent by a gateway device, and saving a correspondence between the user IP address and the user information, comprise:
receiving, by the SP server, a user information packet sent by the gateway device, wherein the user information packet comprises the user information and user IP address of the user equipment, and the user information packet is generated when the gateway device receives an activation request sent by the user equipment; and
parsing, by the SP server, the user information packet, and saving the correspondence between the user IP address and the user information comprised in the user information packet.

7. The method according to claim 5 or 6, wherein, when the SP server receives a service packet of the user equipment forwarded by the gateway device, the performing, by the SP server, service processing on the service packet according to the correspondence between the user IP address and the user information, comprises:
when the SP server receives the service packet of the user equipment forwarded by the gateway device, extracting, by the SP server, the user IP address from the received service packet;
obtaining, by the SP server according to the correspondence between the user IP address and the user information, the user information corresponding to the user IP address extracted from the service packet; and
performing, by the SP server, service processing on the service packet according to the obtained user information, wherein the service processing comprises content recommendation service processing and accounting service processing.

8. A computer storage medium, wherein:
the computer storage medium may store a program, and when the program is executed, the steps according to any one of claims 1 to 4 are comprised.

9. A computer storage medium, wherein:
the computer storage medium may store a program, and when the program is executed, the steps according to any one of claims 5 to 7 are comprised.

10. A gateway device, comprising:
an allocating module, configured to: when an activation request sent by a user equipment is received, allocate a user IP address to the user equipment; and
a sending module, configured to send user information and the user IP address of the user equipment to an SP server, so that the SP server saves a correspondence between the user IP address and the user information and performs service processing on a service packet according to the correspondence between the user IP address and the user information.

11. The gateway device according to claim 10, further comprising:
a determining module, configured to determine whether the activation request is a request based on the user information; wherein
the sending module is specifically configured to: if the determining module determines that the activation request is a request based on the user information, send the user information and user IP address of the user equipment to the SP server.

12. The gateway device according to claim 10 or 11, wherein the sending module comprises:
an encapsulating unit, configured to encapsulate the user information and user IP address of the user equipment into a user information packet; and
a packet sending unit, configured to send the user information packet to the SP server, so that the SP server parses the user information packet and saves the correspondence between the user IP address and the user information comprised in the user information packet and performs service processing on the service packet according to the correspondence between the user IP address and the user information.

13. The gateway device according to claim 12, wherein, the packet sending unit comprises:
an establishing subunit, configured to establish service interaction with the SP server in an IP-based network transmission mode; wherein
the packet sending unit is specifically configured to send the user information packet to the SP server by using the service interaction.

14. An SP server, comprising:
a receiving module, configured to receive user information and a user IP address of a user equipment which are sent by a gateway device;
a saving module, configured to save a correspondence between the user IP address and the user information; and
a processing module, configured to: when a service packet of the user equipment forwarded by the gateway device is received, perform service processing on the service packet according to the correspondence between the user IP address and the user information in the saving module.

15. The SP server according to claim 14, wherein:
the receiving module is specifically configured to receive a user information packet sent by the gateway device, wherein the user information packet comprises the user information and user IP address of the user equipment, and the user information packet is generated when the gateway device receives an activation request sent by the user equipment; and
the saving module is specifically configured to parse the user information packet and save the correspondence between the user IP address and the user information comprised in the user information packet.

16. The SP server according to claim 14 or 15, wherein, the processing module comprises:
an extracting unit, configured to: when the service packet of the user equipment forwarded by the gateway device is received, extract the user IP address from the received service packet;
an obtaining unit, configured to obtain, according to the correspondence between the user IP address and the user information in the saving module, the user information corresponding to the user IP address extracted from the service packet; and
a service processing unit, configured perform service processing on the service packet according to the obtained user information, wherein the service processing comprises content recommendation service processing and accounting service processing.

17. A service processing system, comprising:
the gateway device according to any one of claims 10 to 13 and the SP server according to any one of claims 14 to 16.

18. A gateway device, comprising a processor, a communication interface, and a memory, wherein:
the communication interface is configured to perform communication with a user equipment and an SP server;
the memory is configured to store a program; and
the processor is configured to execute the program to implement
when an activation request sent by the user equipment is received, allocating a user IP address to the user equipment; and
sending user information and the user IP address of the user equipment to the SP server, so that the SP server saves a correspondence between the user IP address and the user information and performs service processing on a service packet according to the correspondence between the user IP address and the user information.

19. The gateway device according to claim 18, wherein the processor is further configured to:
determine whether the activation request is a request based on the user information; and
if it is determined that the activation request is a request based on the user information, perform the step of sending the user information and user IP address of the user equipment to the SP server.

20. The gateway device according to claim 18 or 19, wherein the processor is specifically configured to:
encapsulate the user information and user IP address of the user equipment into a user information packet; and
send the user information packet to the SP server, so that the SP server parses the user information packet and saves the correspondence between the user IP address and the user information comprised in the user information packet and performs service processing on the service packet according to the correspondence between the user IP address and the user information.

21. The gateway device according to claim 20, wherein the processor is specifically configured to:
establish service interaction with the SP server in an IP-based network transmission mode; and
send the user information packet to the SP server by using the service interaction.

22. An SP server, comprising a processor, a communication interface, and a memory, wherein:
the communication interface is configured to perform communication a gateway device;
the memory is configured to store a program; and
the processor is configured to execute the program to implement
receiving user information and a user IP address of a user equipment which are sent by the gateway device, and saving a correspondence between the user IP address and the user information; and
when a service packet of the user equipment forwarded by the gateway device is received, performing service processing on the service packet according to the correspondence between the user IP address and the user information.

23. The SP server according to claim 22, wherein, the processor is specifically configured to:
receive a user information packet sent by the gateway device, wherein the user information packet comprises the user information and user IP address of the user equipment, and the user information packet is generated when the gateway device receives an activation request sent by the user equipment; and
parse the user information packet and save the correspondence between the user IP address and the user information comprised in the user information packet.

24. The SP server according to claim 22 or 23, wherein, the processor is specifically configured to:
when the service packet of the user equipment forwarded by the gateway device is received, extract the user IP address from the received service packet;
obtain, according to the correspondence between the user IP address and the user information, the user information corresponding to the user IP address extracted from the service packet; and
perform service processing on the service packet according to the obtained user information, wherein the service processing comprises content recommendation service processing and accounting service processing.
